(19) Europäisches Patentamt / European Patent Office / Office européen des brevets

(11) **EP 2 401 700 B1**

(12) **FASCICULE DE BREVET EUROPEEN**

(45) Date de publication et mention
de la délivrance du brevet:
**26.08.2015 Bulletin 2015/35**

(21) Numéro de dépôt: **10710374.9**

(22) Date de dépôt: **23.02.2010**

(51) Int Cl.:
*G06K 9/00* (2006.01)    *G06K 9/62* (2006.01)
*G06F 17/30* (2006.01)   *H04H 60/37* (2008.01)

(86) Numéro de dépôt international:
**PCT/FR2010/050304**

(87) Numéro de publication internationale:
**WO 2010/097540 (02.09.2010 Gazette 2010/35)**

(54) **TRAITEMENT D'UN FLUX DE DONNÉES NUMÉRIQUES**

DIGITAL-DATENSTROMVERARBEITUNG

DIGITAL DATA STREAM PROCESSING

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **27.02.2009 FR 0951266**

(43) Date de publication de la demande:
**04.01.2012 Bulletin 2012/01**

(73) Titulaire: **Orange**
**75015 Paris (FR)**

(72) Inventeurs:
• **NATUREL, Xavier**
**14880 Colleville-Montgomery (FR)**
• **BERRANI, Sid Ahmed**
**35135 Chantepie (FR)**

(56) Documents cités:
**US-A1- 2007 083 883     US-A1- 2008 022 296**

• **XAVIER NATUREL ET AL: "Fast Structuring of
Large Television Streams Using Program
Guides" 27 juillet 2006 (2006-07-27), ADAPTIVE
MULTIMEDIA RETRIEVAL: USER, CONTEXT,
AND FEEDBACK; [LECTURE NOTES IN
COMPUTER SCIENCE;;LNCS], SPRINGER
BERLIN HEIDELBERG, BERLIN, HEIDELBERG,
PAGE(S) 222 - 231 , XP019078473 * abrégé
Sections 2 et 3**
• **DUYGULU P ET AL: "Comparison and
combination of two novel commercial detection
methods" 2004 IEEE INTERNATIONAL
CONFERENCE ON MULTIMEDIA AND EXPO
(ICME) (IEEE CAT. NO.04TH8763) IEEE
PISCATAWAY, NJ, USA,, vol. 2, 27 juin 2004
(2004-06-27), pages 1267-1270, XP010771057**

## Description

La présente invention concerne le traitement d'un flux de données numériques. Plus précisément, l'invention se rapporte à l'extraction et l'annotation de séquences et d'inter-séquences à partir d'un flux de données numériques.

Il peut, par exemple, s'agir d'un flux télévisuel. Une séquence est alors un programme télévisé tel que, par exemple, un film, un épisode d'une série, un jeu, un journal, une séquence météo, etc. Une inter-séquence est alors un inter-programme tel que, par exemple, une publicité, une bande annonce, un sponsor précédant le début ou suivant la fin d'un programme, etc.

Le volume de données radiophoniques et audiovisuelles ne cesse de croître faisant naître de nouveaux besoins et services impliquant la mise à disposition de contenus au public. Il s'agit, par exemple, de services de télévision à la demande, de services de contrôle de la diffusion de contenus, etc. Ces services nécessitent un traitement des flux de données correspondants pour en extraire des séquences et des inter-séquences.

La technique de l'invention trouve notamment, mais pas seulement, des applications pour la mise en oeuvre de tels services.

Il existe différentes techniques d'extraction de séquences et d'inter-séquences à partir d'un flux de données numériques.

L'approche la plus simple et la plus directe repose sur l'utilisation d'informations de programmation véhiculées dans le flux lui-même via des EIT (pour *Event Information Tables* en anglais) ou mises à disposition de façon indépendante par l'émetteur du flux comme, par exemple, un guide de programmes.

Cette approche présente l'inconvénient d'être imprécise et incomplète. En effet, les informations sur lesquelles elle se base sont souvent elles-mêmes imprécises (par exemple, les horaires sont donnés à titre indicatif) et incomplètes (beaucoup de programmes, notamment les petits programmes n'y sont pas mentionnés).

Un autre inconvénient est que tout changement de programmation non pris en compte dans les EIT ou le guide de programmes génère une erreur lors de l'extraction.

Une autre approche repose sur l'analyse du contenu du flux de données numériques.

Dans sa thèse intitulée "Structuration automatique de flux vidéo de télévision", Université de Rennes 1, 2007, Xavier Naturel combine plusieurs techniques.

Préalablement, un ensemble de référence comportant des descripteurs caractérisant des programmes et des inter-programmes est constitué manuellement.

Ensuite, l'analyse du contenu du flux s'effectue en plusieurs étapes.

Le flux est découpé et les morceaux obtenus sont caractérisés par des descripteurs. Chaque descripteur est comparé à ceux stockés dans l'ensemble de référence. Lorsqu'une correspondance est établie, le morceau est indexé. Les morceaux qui n'ont pas pu être indexés sont classés en programmes ou inter-programmes en fonction de leur durée. Ensuite, périodiquement les morceaux sont annotés par une analyse globale du flux rapprochant celui-ci de l'EIT.

L'approche peut être complétée, indépendamment des opérations décrites précédemment, par l'application d'une technique de détection de séparation entre deux inter-programmes. Dans un flux télévisuel, une séparation est caractérisée par des images monochromes et des silences. Cette détection permet d'identifier des inter-programmes dont les descripteurs n'auraient pas été stockés dans l'ensemble de référence.

L'approche de Xavier Naturel repose principalement sur la constitution d'un ensemble de référence. Les performances de cette approche sont limitées par le contenu de cet ensemble de référence créé manuellement. Ces performances se dégradent dès que de nouveaux programmes ou inter-programmes sont insérés dans le flux.

Enfin, cette approche reposant sur une analyse globale du flux pour l'annotation, elle ne peut pas délivrer des résultats d'annotation à la volée, c'est-à-dire au fur et à mesure de la réception d'un flux diffusé ou au fur et à mesure de la lecture d'un flux enregistré.

D'autres approches d'extraction de séquences ou d'inter-séquences à partir d'un flux de données numériques reposent sur le caractère répétitif d'inter-séquences dans le flux.

Dans le document intitulé "A non-supervised approach for repeated sequence detection in tv broadcast streams". Signal Processing: Image Communication, special issue on "Semantic Analysis for Interactive Multimedia Services", 2008, G. Manson et al. basent leur approche sur la détection d'inter-programmes qui se répètent dans le flux.

Des descripteurs simples sont calculés pour toutes les images du flux et des descripteurs plus complexes sont calculés pour certaines images du flux, encore appelées images clés. Les deux types de descripteurs sont stockés dans une base de données.

Périodiquement, les descripteurs des images clés stockés dans la base de données sont comparés entre eux. Les descripteurs identiques ou similaires sont regroupés. Ces regroupements permettent de détecter des inter-programmes qui se répètent. Ces inter-programmes sont ensuite reconstitués à partir des images clés auxquelles on associe les images voisines par analyse des descripteurs simples correspondants.

Les programmes sont ensuite déterminés à partir des inter-programmes.

L'inconvénient de cette approche est que la détection des inter-programmes est réalisée périodiquement, la période devant être suffisamment longue pour détecter de nombreuses répétitions. Ainsi, cette approche ne permet pas un traitement à la volée du flux.

Un des buts de l'invention est de remédier aux inconvénients de l'art antérieur précité.

Ainsi, la présente invention concerne, selon un premier aspect, un procédé de traitement d'un flux de données numériques comprenant des séquences et des inter-séquences, lequel procédé comporte une étape de découpage à la volée du flux en segments et de calcul de signatures pour ces segments et une étape de détection d'inter-séquences au cours de laquelle les opérations suivantes sont réalisées à la volée sur le flux :

- une première détection d'inter-séquences par détection de séparation,
- une alimentation d'une base de référence par au moins les signatures des segments des inter-séquences détectées par la première détection,
- une deuxième détection d'inter-séquences par comparaison des signatures des segments du flux, obtenus au cours de l'étape de découpage, avec les signatures des segments des inter-séquences contenues dans la base de référence.

Le traitement du flux de données numériques (détection d'inter-séquences et alimentation d'une base de référence) étant réalisé à la volée, il est plus rapide, plus économique et peut être réalisé pour n'importe quel flux sans connaissance préalable de celui-ci.

L'alimentation de la base de référence étant réalisée automatiquement lors du traitement du flux à la volée, cette alimentation n'est pas manuelle et ne nécessite pas de traitement préalable. En conséquence, elle est moins coûteuse.

La détection d'inter-séquences mettant en oeuvre deux méthodes complémentaires liées entre elles par leur interaction avec la base de référence, cette détection est à la fois plus rapide et plus performante.

Selon une caractéristique préférée, la comparaison des signatures d'un segment du flux, appelé segment requête, avec les signatures d'un segment d'une inter-séquence contenues dans la base de référence, ce segment étant appelé segment candidat, comporte un calcul de distance entre le segment requête et le segment candidat.

Le calcul de distance entre un segment requête et un segment candidat permet de définir si ces deux segments sont identiques ou quasi-identiques.

Selon une caractéristique préférée, la base de référence comporte, en outre, des structures de données relatives aux segments des inter-séquences détectées par la première détection.

Ainsi, les données contenues dans la base de référence permettent d'avoir une bonne connaissance des segments des inter-séquences détectées.

Selon une caractéristique préférée, lorsque la distance entre un segment requête et un segment candidat est inférieure à une valeur seuil donnée de distance, un indicateur de reconnaissance est ajouté ou mis à jour dans la structure de données relative à ce segment candidat.

Ainsi, à tout instant on peut dire si un segment contenu dans la base de référence a servi à la détection d'une inter-séquence par la méthode de reconnaissance. Selon la nature de l'indicateur de reconnaissance, on peut connaître le nombre de fois où cette occurrence s'est produite.

Selon une caractéristique préférée, le procédé de traitement d'un flux de données numériques selon l'invention comporte une étape de nettoyage de la base de référence comprenant la suppression de structures de données de segments en fonction du résultat d'une comparaison de la valeur de l'indicateur de reconnaissance, compris dans les structures de données des segments contenues dans la base de référence, avec une valeur seuil donnée de reconnaissance.

La suppression périodique des segments qui n'ont pas servi à la détection d'une inter-séquence par la méthode de reconnaissance permet d'alléger la base de référence rendant ainsi le procédé plus rapide dans son déroulement et moins coûteux, notamment pour la sauvegarde de cette base.

Selon une caractéristique préférée, le procédé selon l'invention comporte une étape de consolidation d'inter-séquences permettant d'identifier s'il y a chevauchement entre deux inter-séquences détectées successivement.

L'identification de chevauchement entre deux inter-séquences permet de définir plus rigoureusement ces inter-séquences et d'obtenir un procédé plus précis.

Selon une caractéristique préférée, le procédé selon l'invention comporte une étape d'annotation de programme à la volée par application de critères temporels.

Ainsi l'annotation réalisée à la volée est plus rapide et permet d'obtenir des programmes annotés au fur et à mesure de leur diffusion ou de leur lecture.

L'invention concerne aussi un système de traitement d'un flux de données numériques comprenant des séquences et des inter-séquences, lequel système effectue un découpage à la volée du flux en segments et un calcul de signatures pour ces segments et comporte :

- un premier module de détection d'inter-séquences par détection de séparation,
- une base de référence alimentée par au moins les signatures des segments des inter-séquences détectées par le premier module de détection,
- un deuxième module de détection d'inter-séquences par comparaison des signatures des segments du flux, obtenus au cours du découpage, avec les signatures des segments des inter-séquences contenues dans la base de référence,

le premier module et le deuxième module de détection d'inter-séquences traitant le flux à la volée.

Le système selon l'invention présente les mêmes avantages que le procédé décrit ci-dessus.

L'invention concerne encore, un produit programme d'ordinateur comprenant des instructions de code de programme enregistrées sur ou transmises par un support lisible par un ordinateur, pour mettre en oeuvre les étapes du procédé décrit ci-dessus lorsque ledit programme fonctionne sur ordinateur.

D'autres caractéristiques et avantages de la présente invention apparaîtront dans la description ci-après de modes de réalisation préférés décrits en référence aux figures dans lesquelles :

- la figure 1 représente un mode de réalisation d'un procédé de traitement d'un flux de données numériques comprenant des séquences et des inter-séquences,
- la figure 2 représente un mode de réalisation d'un système apte à mettre en oeuvre le procédé de la figure 1.

L'invention concerne le traitement d'un flux de données numériques comprenant des séquences et des inter-séquences. Ces séquences et inter-séquences se différencient les unes des autres essentiellement par leur durée, une inter-séquence étant beaucoup plus courte qu'une séquence.

Ce traitement vise à extraire des séquences ou des inter-séquences à partir du flux de données numériques et à les annoter.

Ce traitement est effectué à la volée c'est-à-dire au fur et à mesure de la réception pour un flux diffusé via un réseau ou au fur et à mesure de la lecture pour un flux enregistré.

Un flux de données numériques peut être découpé en segments. Les séquences et inter-séquences comprises dans ce flux sont alors elles-mêmes découpées en segments. Un segment est un morceau continu du flux et comprend un début et une fin. Un segment est composé d'un ensemble de segments élémentaires. Une signature peut être calculée pour un segment élémentaire permettant ainsi de le caractériser.

L'invention est exposée ci-dessous pour un mode de réalisation préféré dans lequel le flux de données numériques considéré est un flux télévisuel. Ce mode de réalisation est illustratif de l'invention et ne peut pas être considéré comme limitatif de celle-ci.

Un flux télévisuel correspond à un contenu audio et vidéo diffusé en continu par une chaîne de télévision.

Ce contenu comprend des séquences appelées programmes (ou programmes télévisés) et des inter-séquences appelées inter-programmes.

Un programme est, par exemple, un film, un épisode d'une série, un jeu, un journal, une séquence météo, etc. Un inter-programme est, par exemple, une publicité, une bande annonce, un sponsor précédant le début ou suivant la fin d'un programme, etc.

Deux programmes sont séparés par un ou plusieurs inter-programmes. Un programme peut être constitué de plusieurs parties séparées par des inter-programmes comme, par exemple, lorsqu'un film est entrecoupé par des publicités.

Entre deux inter-programmes peut se trouver une séparation qui comprend un ensemble d'images monochromes contigües, accompagnées de silence.

Il peut exister ou ne pas exister de séparation entre un inter-programme et un programme.

Les segments qui composent les programmes et inter-programmes sont des plans. Les segments élémentaires sont des images. Dans le cas d'un flux télévisuel, un plan est un ensemble d'images filmées sans interruption.

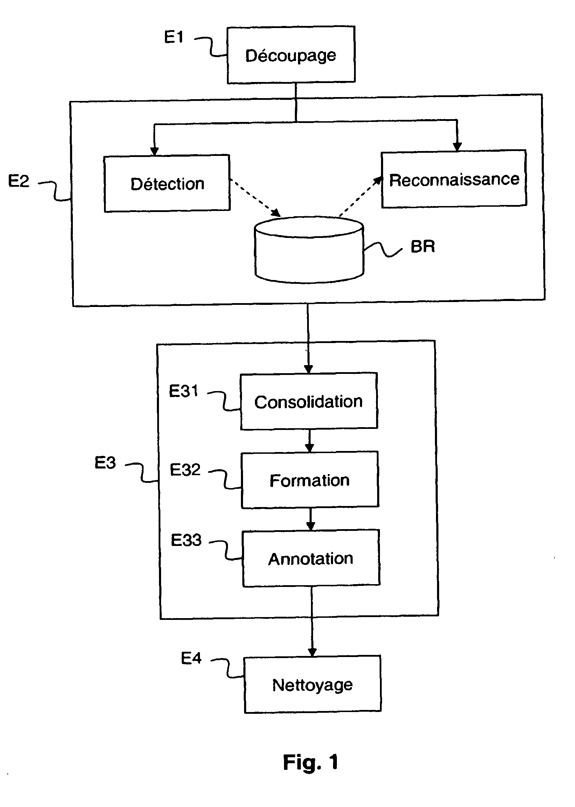

La **figure 1** représente un mode de réalisation d'un procédé de traitement d'un flux de données numériques comprenant des programmes (ou séquences) et des inter-programmes (ou inter-séquences).

Au cours d'une étape E1, le flux est découpé en plans (ou segments) et une signature est calculée pour les images (ou segments élémentaires) constitutives de ces plans.

Une signature caractérise le contenu d'une image.

Pour calculer la signature S d'une image, celle-ci est divisée en 4 blocs sur chacun desquels sont réalisés un sous-échantillonnage vers un bloc 8x8 puis un calcul de DCT (pour *Discrete Cosine Transform* en anglais).

De chaque DCT sont extraits 16 coefficients : 1 coefficient DC (valeur moyenne) et 15 coefficients AC (composante fréquentielle). Chacun de ces coefficients est quantifié sur une longueur de 1 bit, menant à une signature de longueur 64 bits par concaténation des 4 blocs.

Le coefficient DC associé au bloc i, avec i variant de 0 à 3, et noté $DC^i$ est calculé de la façon suivante :

$$DC^i = \begin{cases} 0 \text{ si } DC^i > \overline{DC} \\ 1 \text{ si } DC^i \leq \overline{DC} \end{cases} \text{ avec } \overline{DC} = \frac{1}{4}\sum_{i=0}^{3} DC^i \ .$$

Les 15 coefficients AC associés au bloc i, avec i variant de 0 à 3, et notés $AC_j^i$, avec j variant de 0 à 14, sont calculés de la façon suivante :

$$AC_j^i = \begin{cases} 0 \text{ si } AC_j^i > AC_{med}^i \\ 1 \text{ si } AC_j^i \leq AC_{med}^i \end{cases} \text{ avec } AC_{med}^i = \underset{i,\,j=0\,\text{à}\,14}{\text{median}}(AC_j^i) \ .$$

La signature S d'une image s'écrit alors sous la forme :

$$S = \left[ DC^0 AC_0^0 \dots AC_{14}^0 \ DC^1 AC_0^1 \dots AC_{14}^1 \ DC^2 AC_0^2 \dots AC_{14}^2 \ DC^3 AC_0^3 \dots AC_{14}^3 \right].$$

L'étape suivante E2 est une étape de détection d'inter-programmes (ou inter-séquences).

La détection d'inter-programmes est réalisée par deux méthodes différentes liées entre elles par leur interaction avec une base de référence.

La première méthode de détection d'inter-programmes repose sur la détection de séparation qui existe entre deux inter-programmes.

La méthode appliquée est une méthode classique telle que celle décrite par R Lienhart et al. dans le document intitulé "On the detection and recognition of television commercials", dans Proceedings of the IEEE International Conference on Multimedia Computing and Systems, Ottawa, Canada, 1997.

La détection de séparation comporte une détection de silence et une détection d'images monochromes.

Pour détecter un silence, on mesure l'énergie du signal audio véhiculé dans le flux à un instant donné. Si la valeur de cette énergie est inférieure à une valeur seuil donnée d'énergie alors on considère que cet instant correspond à un silence.

Ensuite, on calcule un indicateur de mono chromaticité pour les images situées autour de l'instant de silence détecté. Pour cela on calcule un histogramme de luminance de l'image considérée en niveaux de gris puis l'entropie de cet histogramme. Si la valeur de cette entropie est inférieure à une valeur seuil donnée d'entropie alors on considère que l'image correspondante est une image monochrome.

En considérant les images autour d'un instant de silence détecté, on obtient les bornes de début et de fin (l'image de début et l'image de fin) de la séparation.

On en déduit la borne de fin de l'inter-programme précédant la séparation et la borne de début de l'inter-programme suivant la séparation. De la même façon, lorsqu'il existe une séparation entre un inter-programme et un programme, on en déduit la borne de fin de l'inter-programme ou du programme précédant la séparation et la borne de début respectivement du programme ou de l'inter-programme suivant la séparation.

Si la distance (par exemple en temps ou en nombre d'images) entre deux séparations est faible alors on en déduit que le morceau de flux compris entre ces deux séparations est un inter-programme. On peut déterminer les bornes de cet inter-programme.

A contrario, si la distance entre deux séparations est grande alors on en déduit que le morceau de flux compris entre ces deux séparations est un programme ou une partie de programme. On peut également déterminer les bornes de ce programme ou de cette partie de programme.

Au fur et à mesure de la détection d'inter-programmes par la méthode de détection de séparation décrite précédemment une base de référence BR est alimentée.

A l'initialisation, c'est-à-dire avant le début du traitement du flux à la volée, la base de référence BR est vide.

Lorsqu'un inter-programme est détecté, des couples (signature, identifiant) sont formés et stockés dans une table de hachage.

Les identifiants désignent les plans constitutifs de l'inter-programme détecté. Ces plans appartiennent à l'ensemble des plans obtenus au cours de l'étape E1 précédente.

Les signatures sont celles des images constitutives d'un plan telles qu'elles ont été calculées au cours de l'étape E1 précédente.

Il y a autant de couples (signature, identifiant) que d'images.

A un plan correspond un seul identifiant et réciproquement. L'identifiant d'un plan pointe vers une structure de données qui regroupe des informations relatives à ce plan comme par exemple les signatures des images constitutives de ce plan, un indicateur de reconnaissance, etc.

La base de référence BR comporte la table de hachage et les structures de données relatives aux plans.

La deuxième méthode de détection d'inter-programmes repose sur la reconnaissance d'inter-programmes.

Pour un plan obtenu au cours de l'étape E1 de découpage du flux en plans, on cherche si celui-ci est présent dans la base de référence BR, en comparant les signatures relatives à ce plan à celles contenues dans la base de référence BR.

Pour cela, on regarde si la signature de la première image du plan considéré, dit plan requête, se trouve dans la table de hachage. Si cette signature se trouve dans la table de hachage alors l'identifiant auquel la signature est associée permet de retrouver un plan, dit plan candidat.

Une distance est alors calculée entre le plan requête et le plan candidat. Cette distance est une moyenne des distances, calculées par la distance de Hamming, entre les signatures des images respectivement du plan requête et du plan candidat.

Si la valeur de la distance calculée est inférieure à une valeur seuil donnée de distance alors le plan requête est considéré comme reconnu, c'est-à-dire identique ou presque identique au plan candidat.

Un plan reconnu est considéré comme appartenant à un inter-programme, par définition de la base de référence BR.

Lorsqu'un plan est reconnu, un indicateur de reconnaissance (par exemple, une valeur numérique, une indication temporelle comme l'heure courante pour un flux diffusé, etc.) est ajouté ou mis à jour dans la structure de données associée à ce plan dans la base de référence BR.

Les trois opérations réalisées au cours de cette étape E2, à savoir la détection d'inter-programmes par la première et la deuxième méthode ainsi que l'alimentation de la base de référence BR sont réalisées en parallèle.

Les deux méthodes de détection d'inter-programmes se complètent et permettent de détecter d'une manière les inter-programmes du flux. Par exemple, la deuxième méthode de détection (par reconnaissance) permet de détecter des inter-programmes accolés à des programmes et pour lesquels il n'existe pas de séparation entre les deux.

Les deux méthodes de détection d'inter-programmes sont liées entre elles par leur interaction avec la base de référence BR. La première méthode permet d'alimenter la base de référence BR. La deuxième méthode exploite les données de la base de référence BR.

L'étape suivante E3 est une étape d'extraction et d'annotation de programme.

Cette étape comporte trois sous-étapes E31, E32 et E33 réalisées à la volée.

La sous-étape E31 est une étape de consolidation d'inter-programmes.

Cette étape permet de consolider les résultats obtenus par les deux méthodes de détection d'inter-programmes décrites précédemment

Elle permet notamment de déterminer dans certains cas, de façon plus précise, les bornes (image de début et image de fin) d'un inter-programme détecté.

Pour cela, on considère deux inter-programmes $IP_k$ et $IP_{k+1}$ détectés successivement. Ces deux inter-programmes sont détectés indifféremment par l'une ou l'autre des deux méthodes exposées précédemment.

$IP_k$ est défini par l'intervalle $[d_k, f_k]$ où $d_k$ est l'instant de l'image de début et $f_k$ est l'instant de l'image de fin de cet inter-programme.

$IP_{k+1}$ est défini par l'intervalle $[d_{k+1}, f_{k+1}]$ où $d_{k+1}$ est l'instant de l'image de début et $f_{k+1}$ est l'instant de l'image de fin de cet inter-programme.

On considère également $L_{max}$, la longueur maximale en temps d'un inter-programme.

Si la distance temporelle séparant l'image de fin de l'inter-programme $IP_k$ de l'image de début de l'inter-programme suivant $IP_{k+1}$ est inférieure à la longueur maximale d'un inter-programme soit :

$$d_{k+1} - f_k \leq L_{max},$$

alors on en déduit qu'il y a chevauchement entre les deux inter-programmes $IP_k$ et $IP_{k+1}$ ou que ces deux inter-programmes sont séparés par un espace plus court que la longueur maximale en temps d'un inter-programme ($L_{max}$).

On redéfinit alors les bornes de l'inter-programme $IP_k$ par réunion des deux inter-programmes $IP_k$ et $IP_{k+1}$, en incluant, le cas échéant, l'espace compris entre ces deux inter-programmes. On obtient alors :

$$IP_k = [d_k, f_{k+1}].$$

La sous-étape E32 est une étape de formation de programmes.

Dès lors que deux inter-programmes successifs $IP_I$ et $IP_{I+1}$ sont correctement définis par leurs intervalles respectifs $[d_I, f_I]$ et $[d_{I+1}, f_{I+1}]$ il est possible de déterminer si une partie de programme ou un programme se trouve entre ces deux inter-programmes.

Pour cela, on regarde la distance temporelle $d_{I+1} - f_I$ séparant l'image de fin de l'inter-programme $IP_I$ de l'image de début de l'inter-programme suivant $IP_{I+1}$.

Si cette distance est supérieure à la longueur maximale d'un inter-programme soit $d_{I+1} - f_I > L_{max}$ alors on en déduit que le morceau de flux situé entre ces deux inter-programmes est une partie de programme ou un programme.

Cette partie de programme ou ce programme est défini par l'intervalle $[f_{I+1}, d_{I+1}-1]$ où $f_I + 1$ est l'instant de l'image de début et $d_{I+1}-1$ est l'instant de l'image de fin de ce programme ou de cette partie de programme.

La sous-étape suivante E33 est une étape d'annotation de programmes.

L'annotation est réalisée à la volée dès la détection d'une partie de programme ou d'un programme pour chaque programme ou partie de programme formé à la sous-étape E32 précédente.

Cette annotation repose sur l'utilisation d'un guide de programmes comme par exemple un EIT (pour *Event Information Table* en anglais). Un guide de programmes comporte des informations relatives aux programmes telles que le nom (ou étiquette), l'heure approximative de début, l'heure approximative de fin, la durée approximative, etc.

L'annotation s'effectue en utilisant des critères de proximité temporelle.

Pour cela, on compare l'instant de l'image de début et l'instant de l'image de fin d'une partie de programme ou d'un programme formé au cours de la sous-étape précédente E32 avec respectivement les heures de début et les heures de fin de programmes contenues dans le guide de programmes.

L'étiquette du guide de programmes sélectionnée et servant à annoter le programme ou la partie de programme considéré est celle qui correspond au recouvrement temporel maximal avec le programme ou la partie de programme considéré.

Lorsque deux parties de programme sont annotées par la même étiquette, ces deux parties de programme sont fusionnés. Ceci correspond, par exemple, à un film entrecoupé par de la publicité.

L'étape suivante E4 est une étape de nettoyage de la base de référence BR.

Le nettoyage est réalisé périodiquement, la période de nettoyage étant préalablement définie.

On rappelle qu'au cours de l'étape E2, un indicateur de reconnaissance est ajouté ou mis à jour dans la structure de données relative à un plan et contenue dans la base de référence BR lorsque ce plan permet de détecter un inter-programme par la deuxième méthode de détection, c'est-à-dire par la méthode de reconnaissance d'inter-programmes.

Le nettoyage de la base de référence comporte la suppression de la structure de données associée à un plan en fonction du résultat d'une comparaison de l'indicateur de reconnaissance de ce plan avec une valeur seuil donnée de reconnaissance.

Ainsi, un plan qui n'a pas ou a peu servi pour la détection d'inter-programmes est supprimé de la base de référence BR.

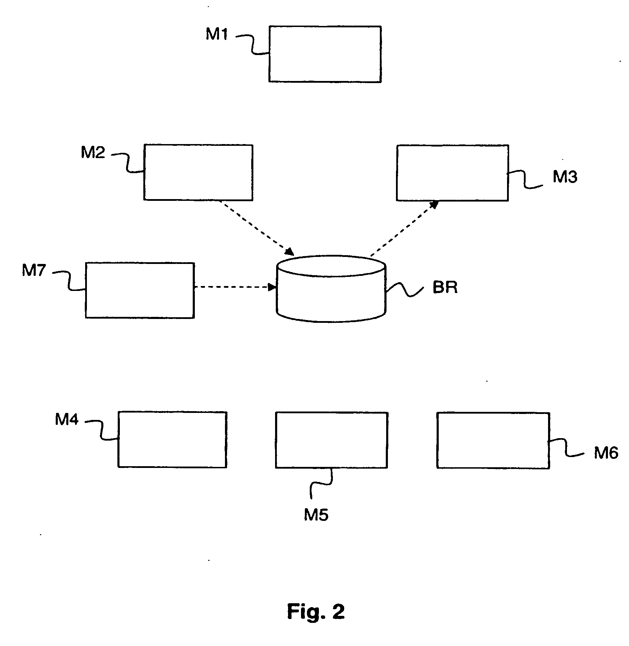

La **figure 2** représente un mode de réalisation d'un système apte à mettre en oeuvre un procédé de traitement d'un flux de données numériques comprenant des séquences et des inter-séquences tel que décrit ci-dessus.

Le système comporte un module M1 de découpage en segments à la volée d'un flux de données numériques reçu ou lu.

Le module M1 comprend également des moyens de calcul d'une signature pour les segments élémentaires constitutifs des segments obtenus suite au découpage du flux.

Le module M1 met en oeuvre l'étape E1 telle que décrite ci-dessus.

Le système comprend aussi un premier et un deuxième module, respectivement M2 et M3, de détection d'inter-séquences.

Le premier module M2 de détection d'inter-séquences détecte des inter-séquences par application d'une méthode de détection de séparation existant entre deux inter-séquences tel que décrit à l'étape E2 ci-dessus.

Le deuxième module M3 de détection d'inter-séquences détecte des inter-séquences par application d'une méthode de reconnaissance d'inter-séquences tel que décrit à l'étape E2 ci-dessus.

Le premier et le deuxième module, respectivement M2 et M3, de détection d'inter-séquences traitent le flux à la volée.

Le système comprend aussi une base de référence BR alimentée par le premier module M2 de détection d'inter-séquences. Le contenu de la base de référence BR est exploité par le deuxième module M3 de détection d'inter-séquences pour la reconnaissance d'inter-séquences.

L'alimentation, l'exploitation et le contenu de la base de référence BR sont décrits précédemment à l'étape E2.

Les traitements effectués à la volée sur le flux par le premier et le deuxième module, respectivement M2 et M3, de détection ainsi que l'alimentation de la base de référence BR sont réalisés en parallèle.

En référence à la sous-étape E31, le système comprend un module M4 de consolidation d'inter-programmes.

En référence à la sous-étape E32, le système comprend également un module M5 de formation de programmes.

Le système comprend aussi un module M6 d'annotation de programmes.

En référence à l'étape E33 décrite ci-dessus, le module M6 d'annotation de programmes affecte une étiquette aux programmes formés par le module M5 de formation de programmes.

Le système comprend également un module M7 de nettoyage de la base de référence tel que précédemment décrit à l'étape E4.

Le système comprend en outre une unité centrale de commande, non représentée, connectée à chacun des modules M1 à M7 et adaptée pour commander leur fonctionnement.

Les modules M1 à M7 peuvent être des modules logiciels formant un programme d'ordinateur. L'invention concerne donc également un programme d'ordinateur pour un système d'extraction de séquences et/ou d'inter-séquences à partir d'un flux de données numériques comprenant des instructions de code de programme pour faire exécuter le procédé précédemment décrit par le système.

Les différents modules logiciels peuvent être stockés dans ou transmis par un support de données. Celui-ci peut être un support matériel de stockage, par exemple un CD-ROM, une disquette magnétique ou un disque dur, ou bien un support transmissible tel qu'un signal électrique, optique ou radio.

## Revendications

**1.** Procédé de traitement d'un flux de données numériques de type audio et vidéo comprenant des séquences et des inter-séquences, lequel procédé comportant une étape (E1) de découpage à la volée du flux en segments, où un segment est un morceau continu du flux, et de calcul de signatures pour ces segments, et une étape (E2) de détection d'inter-séquences au cours de laquelle les opérations suivantes sont réalisées à la volée sur le flux :

- une première détection d'inter-séquences par détection de séparation, une dite séparation séparant deux inter-séquences ou une inter-séquence et une séquence,
- une alimentation d'une base de référence (BR) par au moins les signatures des segments des inter-séquences détectées par la première détection,
- une deuxième détection d'inter-séquences par comparaison des signatures des segments du flux, obtenus au cours de l'étape (E1) de découpage, avec les signatures des segments des inter-séquences contenues dans la base de référence (BR).

**2.** Procédé selon la revendication 1, **caractérisé en ce que** la comparaison des signatures d'un segment du flux, appelé segment requête, avec les signatures d'un segment d'une inter-séquence contenues dans la base de référence (BR), ce segment étant appelé segment candidat, comporte un calcul de distance entre le segment requête et le segment candidat.

**3.** Procédé selon la revendication 1 ou 2, **caractérisé en ce que** la base de référence (BR) comporte, en outre, des structures de données relatives aux segments des inter-séquences détectées par la première détection.

**4.** Procédé selon les revendications 2 et 3, **caractérisé en ce que**, lorsque la distance entre un segment requête et un segment candidat est inférieure à une valeur seuil donnée de distance, un indicateur de reconnaissance est ajouté ou mis à jour dans la structure de données relative à ce segment candidat.

**5.** Procédé selon les revendications 3 et 4, **caractérisé en ce qu'**il comporte une étape (E4) de nettoyage de la base de référence (BR) comprenant la suppression de structures de données de segments en fonction du résultat d'une comparaison de la valeur de l'indicateur de reconnaissance, compris dans les structures de données des segments contenues dans la base de référence (BR), avec une valeur seuil donnée de reconnaissance.

**6.** Procédé selon l'une quelconque des revendications 1 à 5, **caractérisé en ce qu'**il comporte une étape (E31) de consolidation d'inter-séquences permettant d'identifier s'il y a chevauchement entre deux inter-séquences détectées successivement.

**7.** Procédé selon l'une quelconque des revendications 1 à 6, **caractérisé en ce qu'**il comporte une étape (E33) d'annotation de programme à la volée par application de critères temporels.

**8.** Système de traitement d'un flux de données numériques de type audio et vidéo comprenant des séquences et des inter-séquences, lequel système effectuant un découpage à la volée du flux en segments, où un segment est un morceau continu du flux, et un calcul de signatures pour ces segments, comportant :

- un premier module (M2) de détection d'inter-séquences par détection de séparation, une dite séparation séparant deux inter-séquences ou une inter-séquence et une séquence,
- une base de référence (BR) alimentée par au moins les signatures des segments des inter-séquences détectées par le premier module de détection,
- un deuxième module (M3) de détection d'inter-séquences par comparaison des signatures des segments du flux, obtenus au cours du découpage, avec les signatures des segments des inter-séquences contenues dans la base de référence (BR),

le premier module (M2) et le deuxième module (M3) de détection d'inter-séquences traitant le flux à la volée.

9. Produit programme d'ordinateur comprenant des instructions de code de programme enregistrées sur ou transmises par un support lisible par un ordinateur, pour mettre en oeuvre les étapes du procédé selon l'une quelconque des revendications 1 à 7 lorsque ledit programme fonctionne sur ordinateur.


**Patentansprüche**

1. Verfahren zur Verarbeitung eines digitalen Datenstroms vom Typ Audio und Video, welcher Sequenzen und Inter-Sequenzen aufweist, wobei das Verfahren einen Schritt (E1) der Zerlegung des Datenstroms "on the fly" in Segmente von Einstellungen und der Berechnung von Signaturen für diese Segmente und einen Schritt (E2) der Erkennung von Inter-Sequenzen, in dessen Verlauf die folgenden Arbeitsgänge "on the fly" an dem Datenstrom ausgeführt werden, aufweist:

   - eine erste Erkennung von Inter-Sequenzen durch Erkennung einer Trennung zwischen zwei Inter-Sequenzen,
   - eine Speisung einer Bezugsbasis (BR) mit mindestens den Signaturen der Segmente der Inter-Sequenzen, die durch die erste Erkennung erkannt wurden,
   - eine zweite Erkennung von Inter-Sequenzen durch Vergleich der Signaturen der Segmente des Datenstroms, die im Verlauf des Schrittes (E1) der Zerlegung erhalten wurden, mit den Signaturen der Segmente der Inter-Sequenzen, die in der Bezugsbasis (BR) enthalten sind.

2. Verfahren nach Anspruch 1, **dadurch gekennzeichnet, dass** der Vergleich der Signaturen eines Segments des Datenstroms, "Anfrage-Segment" genannt, mit den Signaturen eines Segments einer Inter-Sequenz, die in der Bezugsbasis (BR) enthalten sind, wobei dieses Segment "Kandidat-Segment" genannt wird, eine Berechnung eines Abstands zwischen dem Anforderungs-Segment und dem Kandidat-Segment beinhaltet.

3. Verfahren nach Anspruch 1 oder 2, **dadurch gekennzeichnet, dass** die Bezugsbasis (BR) außerdem Datenstrukturen aufweist, welche die Segmente der Inter-Sequenzen betreffen, die durch die erste Erkennung erkannt wurden.

4. Verfahren nach den Ansprüchen 2 und 3, **dadurch gekennzeichnet, dass**, wenn der Abstand zwischen dem Anforderungs-Segment und dem Kandidat-Segment kleiner als ein vorgegebener Schwellenwert des Abstands ist, in der dieses Kandidat-Segment betreffenden Datenstruktur ein Erkennungs-Indikator hinzugefügt oder aktualisiert wird.

5. Verfahren nach den Ansprüchen 3 und 4, **dadurch gekennzeichnet, dass** es einen Schritt (E4) der Reinigung der Bezugsbasis (BR) aufweist, welcher die Entfernung von Datenstrukturen von Segmenten in Abhängigkeit vom Ergebnis eines Vergleichs des Wertes des Erkennungs-Indikators, der in den in der Bezugsbasis (BR) enthaltenen Datenstrukturen der Segmente enthalten ist, mit einem vorgegebenen Erkennungs-Schwellenwert beinhaltet.

6. Verfahren nach einem der Ansprüche 1 bis 5, **dadurch gekennzeichnet, dass** es einen Schritt (E31) der Verdichtung von Inter-Sequenzen aufweist, der es ermöglicht zu ermitteln, ob eine Überlappung zwischen zwei nacheinander erkannten Inter-Sequenzen vorhanden ist.

7. Verfahren nach einem der Ansprüche 1 bis 6, **dadurch gekennzeichnet, dass** es einen Schritt (E33) der Programmannotation "on the fly" durch Anwendung von zeitlichen Kriterien aufweist.

8. System zur Verarbeitung eines digitalen Datenstroms vom Typ Audio und Video, welcher Sequenzen und Inter-Sequenzen aufweist, wobei das System eine Zerlegung des Datenstroms "on the fly" in Segmente von Einstellungen und eine Berechnung von Signaturen für diese Segmente durchführt, aufweisend:

- ein erstes Modul (M2) zur Erkennung von Inter-Sequenzen durch Erkennung einer Trennung zwischen zwei Inter-Sequenzen,
- eine Bezugsbasis (BR), die mit mindestens den Signaturen der Segmente der Inter-Sequenzen, die von dem ersten Erkennungsmodul erkannt wurden, gespeist wird,
- ein zweites Modul (M3) zur Erkennung von Inter-Sequenzen durch Vergleich der Signaturen der Segmente des Datenstroms, die im Verlauf der Zerlegung erhalten wurden, mit den Signaturen der Segmente der Inter-Sequenzen, die in der Bezugsbasis (BR) enthalten sind,

wobei das erste Modul (M2) und das zweite Modul (M3) zur Erkennung von Inter-Sequenzen den Datenstrom "on the fly" verarbeiten.

9. Computerprogrammprodukt, welches Programmcodeanweisungen aufweist, die auf einem computerlesbaren Datenträger gespeichert sind oder durch einen solchen übertragen werden, um die Schritte des Verfahrens nach einem der Ansprüche 1 bis 7 durchzuführen, wenn dieses Programm auf einem Computer ausgeführt wird.

**Claims**

1. Method for processing a stream of digital data of audio and video type comprising sequences and inter-sequences, the method including a step (E1) of dividing the stream on the fly into segments, where a segment is a continuous piece of the stream, and of computing signatures for these segments and a step (E2) of detecting inter-sequences, during which step the following operations are performed on the stream on the fly:

- first detection of inter-sequences by detection of separation, said separation separating two inter-sequences or an inter-sequence and a sequence,
- feeding of a reference base (BR) with at least the signatures of the segments of the inter-sequences detected by the first detection,
- second detection of inter-sequences by comparison of the signatures of the segments of the stream, which segments are obtained during the dividing step (E1), with the signatures of the segments of the inter-sequences that are contained in the reference base (BR).

2. Method according to Claim 1, **characterized in that** the comparison of the signatures of a segment of the stream, known as a request segment, with the signatures of a segment of an inter-sequence that are contained in the reference base (BR), this segment being called candidate segment, includes computation of a distance between the request segment and the candidate segment.

3. Method according to Claim 1 or 2, **characterized in that** the reference base (BR) furthermore includes data structures related to the segments of the inter-sequences detected by the first detection.

4. Method according to Claims 2 and 3, **characterized in that**, when the distance between a request segment and a candidate segment is below a given distance threshold value, a recognition indicator is added or updated in the data structure related to this candidate segment.

5. Method according to Claims 3 and 4, **characterized in that** it includes a step (E4) of cleaning the reference base (BR) comprising the removal of segment data structures according to the result of a comparison between the value of the recognition indicator, included in the data structures of the segments, which data structures are contained in the reference base (BR), and a given recognition threshold value.

6. Method according to any one of Claims 1 to 5, **characterized in that** it includes a step (E31) of inter-sequence consolidation making it possible to identify if there is an overlap between two consecutively-detected inter-sequences.

7. Method according to any one of Claims 1 to 6, **characterized in that** it includes a step (E33) of program annotation on the fly by application of temporal criteria.

8. System for processing a stream of digital data of audio and video type comprising sequences and inter-sequences, the system carrying out division of the stream on the fly into segments, where a segment is a continuous piece of the stream, and computing of signatures for these segments, including:

- a first module (M2) for detecting inter-sequences by detection of separation, said separation separating two inter-sequences or an inter-sequence and a sequence,
- a reference base (BR) fed with at least the signatures of the segments of the inter-sequences detected by the first detection module,
- a second module (M3) for detecting inter-sequences by comparison of the signatures of the segments of the stream, which segments are obtained during the division, with the signatures of the segments of the inter-sequences that are contained in the reference base (BR),

the first module (M2) and the second module (M3) for detecting inter-sequences processing the stream on the fly.

9. Computer program product comprising program code instructions stored on or transmitted by a computer-readable storage medium, for implementing the steps of the method according to any one of Claims 1 to 7 when said program is running on a computer.

E1 — Découpage

E2 — Détection ⟶ ⟵ Reconnaissance

BR

E3 — E31 — Consolidation

E32 — Formation

E33 — Annotation

E4 — Nettoyage

**Fig. 1**

M1 ⌇ ☐

M2 ⌇ ☐                          ☐ ⌇ M3

M7 ⌇ ☐  ⇢  ⌀ ⌇ BR

M4 ⌇ ☐      ☐      ☐ ⌇ M6

M5

**Fig. 2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Xavier Naturel combine plusieurs techniques. *Structuration automatique de flux vidéo de télévision,* 2007
- **G. MANSON.** A non-supervised approach for repeated sequence detection in tv broadcast streams. *Semantic Analysis for Interactive Multimedia Services,* 2008
- On the detection and recognition of television commercials. *Proceedings of the IEEE International Conference on Multimedia Computing and Systems,* 1997